# FASCICULE DE BREVET EUROPEEN

(11) **EP 3 408 689 B1**
(45) Date de publication et mention de la délivrance du brevet: **25.12.2019**
(21) Numéro de dépôt: 17701356.2
(22) Date de dépôt: 26.01.2017
(51) Int. Cl.: G01T 1/00, G01T 1/20

(54) **CELLULE DE SCINTILLATION, ENSEMBLE DE DÉTECTION DE RAYONNEMENTS IONISANTS ET PROCÉDÉ DE DÉTECTION DE RAYONNEMENTS IONISANTS**
SZINTILLATIONSZELLE, ANORDNUNG ZUR DETEKTION VON IONISIERENDER STRAHLUNG UND VERFAHREN ZUR DETEKTION VON IONISIERENDER STRAHLUNG
SCINTILLATION CELL, ASSEMBLY FOR DETECTING IONISING RADIATION AND METHOD FOR DETECTING IONISING RADIATION

(30) Priorité: 29.01.2016 FR 1650717
(43) Date de publication de la demande: 05.12.2018
(73) Titulaire: Commissariat à l'Energie Atomique et aux Energies Alternatives, 75015 Paris (FR)
(72) Inventeur: COULON, Romain, 58400 Chaulgnes (FR)
(74) Mandataire: Brevalex
(86) Numéro de dépôt international: PCT/EP2017/051684
(87) Numéro de publication internationale: WO 2017/129700

(56) Documents cités:
- DE-C1- 19 908 589
- US-A- 3 005 100
- US-A- 5 264 702
- US-A1- 2011 163 237
- SINGH A N ET AL: "A fast responding tritium in air monitor for use in operational areas of heavy water power reactors", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, vol. A357, no. 2, 21 avril 1995 (1995-04-21), pages 601-604, XP004009539, ISSN: 0168-9002, DOI: 10.1016/0168-9002(94)01738-7 cité dans la demande

## Description

### DOMAINE TECHNIQUE

L'invention a pour objet la détection et l'identification de rayonnements ionisants et plus particulièrement des rayonnements β issus du tritium. L'invention vise en particulier les rayonnements ionisants détectable au moyen de la scintillation, c'est-à-dire les rayonnements ionisants particulaires, tels que les rayonnements α (alpha) et β (béta), auxquels s'ajoute les rayonnements γ (gamma).

L'invention concerne ainsi plus particulièrement une cellule de scintillation, un ensemble de détection de rayonnements ionisants et un procédé de détection de rayonnements ionisants.

### ÉTAT DE LA TECHNIQUE ANTÉRIEURE

S'il existe des dispositifs permettant la détection et la mesure de rayonnements β issus du tritium, ceux-ci ne sont généralement pas fonctionnels en présence de rayonnements ionisants autres, tels que les rayonnements γ ou α. En effet, il n'est pas possible, avec ce type de dispositif, tel que la chambre d'ionisation décrite dans le document US 2599922, ou les détecteur à scintillation décrit dans les documents DE 19908589, US 3005100 et US 5264702, de différencier le rayonnement β issus du tritium des autres rayonnements ionisants particulaires.

Une piste pour permettre une telle détection et mesure en présence de rayonnements ionisants particulaires autres consiste à recourir à des cellules de scintillation telles que décrites dans les documents US 3465147 ou dans les travaux de Singh et ces coauteurs publiés dans la revue scientifique « Nuclear Instruments and Methods in Physics Research A » numéro 357 pages 601 à 604 en 1994.

De telles cellules de scintillation permettent la détection de rayonnements ionisants dans un fluide et comportent généralement :
- un premier guide d'onde comprenant au moins une surface, la surface comprenant une première couche d'un premier matériau de scintillation.

Dans le cas de la cellule de scintillation divulguée par Singh et ses coauteurs, cette cellule est associée à un premier et un deuxième photomultiplicateur comportant chacun un premier et un deuxième canal de mesure configurés pour mesurer respectivement les signaux de faible énergie, c'est-à-dire d'énergie maximale 18 keV, et les signaux de forte énergie, c'est-à-dire supérieure à 18 keV.

A partir des signaux de comptages issus des première et deuxième canaux des photomultiplicateurs, Singh et ses coauteurs montrent qu'il est possible d'estimer en calculant le rapport des comptages entre les premiers et les deuxièmes canaux, la présence ou non de rayonnement β issus du tritium. Néanmoins, les mesures permises par ces cellules de scintillation restent plus qualitatives que quantitatives. Il n'est en effet pas possible de distinguer avec de telles cellules de scintillation un signal de scintillation correspondant à une particule β issue du tritium d'un signal de scintillation lié à un rayonnement ionisant autre.

On notera que cette problématique s'applique particulièrement dans la détection de particule β issue du tritium lors de mesure de radioactivité radon, tritium et gaz rare dans l'environnement (notamment dans le suivi de la pollution aux radons dans les habitations et autres immeubles) et dans les infrastructures nucléaires.

Une autre piste proposée dans le document US 2011/163237 consiste en l'utilisation de deux matériaux de scintillation en contact avec la surface du photomultiplicateur et à l'utilisation d'une couche de protection pour supprimer la contribution de certaines particules α.

Ainsi un dispositif de scintillation décrit dans le document US 2011/163237 comporte :
- un photomultiplicateur comportant une fenêtre de mesure,
- un premier matériau de scintillation,
- une couche d'un deuxième matériau de scintillation recouvrant le premier matériau de scintillation, l'épaisseur de la couche étant est telle que les particules β du tritium soient pratiquement toute déposées dans le deuxième matériau de scintillation, le premier et le deuxième matériau de scintillation présentent au moins une caractéristique de scintillation différente l'une de l'autre de manière à permettre la distinction de leur contribution respective,
- un écran ou d'une deuxième couche d'un troisième matériau de scintillation recouvrant la couche du deuxième matériau de scintillation et adapté pour de intercepter certaines particules α s α issues du radon 222 et pour supprimer la contribution de ces particules α dans le premier et le deuxième matériau de scintillation.

Ainsi, avec un tel dispositif, l'utilisation de l'écran, ou de la deuxième couche du troisième matériau de scintillation, fait que la première couche du deuxième matériau de scintillation n'est pas destinée à être mise en contact avec un fluide potentiellement radioactif dont le rayonnement ionisant doit être détecté par le dispositif.

Un tel dispositif et le procédé de détection associé permettent de distinguer les signaux de scintillation qui ont pour origine les particules β issues du tritium des signaux de scintillation qui ont pour origine les rayonnements ionisants autres que les particules β issues du tritium. En effet, les signaux de scintillation qui ont pour origine les particules β issues du tritium vont générer un signal de scintillation uniquement dans la première couche du deuxième matériau de scintillation tandis que les autres particules, tels que les particules non issues du tritium ou les particules α issues du radon 222 ou du thoron, vont également générer un signal de scintillation dans le premier matériau de scintillation.

Ainsi, avec un procédé de détection selon le document US 2011/163237, il est possible de discriminer les signaux de scintillation qui ont pour origine les particules β issues du tritium des autres signaux de scintillation. Néanmoins, dans le cas où il est nécessaire de détecter l'ensemble du signal de scintillation, et notamment celui des particules α issues du radon 222, il est nécessaire d'utiliser un dispositif de détection muni d'une deuxième couche de scintillation. Le traitement des signaux de scintillation et la fabrication du dispositif de scintillation en sont donc complexifiés par rapport à ces mêmes procédés et dispositif du document US 2011/163237 quand seule la discrimination des signaux de scintillation qui ont pour origine les particules β issues du tritium est nécessaire.

### EXPOSÉ DE L'INVENTION

La présente invention vise à remédier à cet inconvénient et a ainsi pour but de fournir un procédé de détection permettant la détection et la discrimination d'un signal de scintillation d'une particule β issues du tritium ceci en donnant accès à l'ensemble du signal de scintillation et notamment à celui des particules α issue du radon 222 ou du thoron.

L'invention concerne à cet effet un procédé de détection de rayonnements ionisants d'un fluide potentiellement radioactif au moyen d'une cellule de scintillation, selon la revendication 1,
ladite cellule de scintillation comprenant :
- au moins un premier guide d'onde comprenant au moins une surface, la surface étant recouverte d'une première couche d'un premier matériau de scintillation,
- une deuxième couche d'un deuxième matériau de scintillation recouvrant la première couche, l'épaisseur de la deuxième couche étant comprise entre 1 fois et 4 fois le parcours moyen d'une particule β du tritium dans le deuxième matériau de scintillation, le premier et le deuxième matériau de scintillation présentent au moins une caractéristique de scintillation différente l'une de l'autre de manière à permettre la distinction de leur contribution respective, la deuxième couche étant destinée à être en contact avec le fluide,
ledit procédé de détection comprenant les étapes suivantes :
- mise en contact du fluide avec la deuxième couche,
- détection et enregistrement du signal de scintillation,
- séparation du signal de scintillation enregistré en une première et une deuxième contribution respectives de la première et de la deuxième couche,
- détection d'une particule β issue du tritium si la contribution de la première couche est inférieure à un seuil de détection d'un rayonnement et si la somme des contributions de la première et de la deuxième couche est inférieure à un premier seuil de scintillation de détection d'une particule α issue du radon 222 ou du thoron.

Avec un tel procédé, il est possible d'identifier le signal de scintillation d'une particule β issue du tritium même en présence d'autres rayonnements ionisant, telle que des particule α issues du radon 222 ou du thoron ou des particules β non issue tritium. Cette identification ne fait pas appel à l'utilisation d'une couche d'un troisième matériau de scintillation et ne nécessite donc pas le traitement de trois signaux de scintillation différents comme c'est le cas dans l'art antérieur. Le procédé et le dispositif permettant sa mise en œuvre sont donc simplifiés vis-à-vis de ceux de l'art antérieur.

La cellule de scintillation étant une cellule dans laquelle la caractéristique de scintillation différente entre le premier et le deuxième matériau de scintillation est une caractéristique temporelle de scintillation,
l'étape de détection et d'enregistrement du signal de scintillation peut consister en une étape d'enregistrement de la variation temporelle du signal de scintillation pendant un temps donné,
l'étape de séparation du signal de scintillation enregistré consistant en une séparation des contributions respectives de la première et la deuxième couche à partir d'une première et deuxième plages temporelles définies à partir de la caractéristique de scintillation différente entre le premier et le deuxième matériau de scintillation.

La cellule de scintillation étant une cellule dans laquelle la caractéristique de scintillation différente entre le premier et le deuxième matériau de scintillation est une longueur d'onde de scintillation,
l'étape de détection et d'enregistrement du signal de scintillation peut consister en une récupération du signal de scintillation aux longueurs de scintillation respectives du premier et du deuxième matériau de scintillation,
l'étape de séparation du signal de scintillation enregistré consistant en une récupération respective et séparée du signal de scintillation aux longueurs d'onde de scintillation du premier et du deuxième matériau de scintillation.

De telles séparations des contributions de la première et de la deuxième couche sont particulièrement aisées à mettre en œuvre de manière automatique sans nécessiter un lourd traitement informatique qui serait peu compatible avec la durée de perception d'un signal de scintillation.

Lors de l'étape de détection d'une particule β du tritium, il peut être identifié la nature du rayonnement ionisant à l'origine du signal de scintillation détecté.

De cette manière il est possible d'identifier les éléments à l'origine des signaux de scintillation perçus et donc le type de pollution radioactive éventuellement présente dans le fluide potentiellement radioactif.

L'étape de détection d'une particule du tritium comporte les sous-étapes suivantes :
- détermination si la somme des contributions de la première et la deuxième couche est supérieure à un premier seuil de scintillation,
- comptage d'une particule α issue du radon 222 ou du thoron si la somme des contributions de la première et deuxième couche a été déterminée comme supérieure au premier seuil de scintillation,
- si la somme des contributions de la première et deuxième couche a été déterminée comme inférieure à un premier seuil de scintillation, détermination si la contribution de la première couche est significative en vérifiant qu'elle est supérieure à un deuxième seuil de scintillation,
- comptage d'une particule β non issue du tritium ou d'un photon y, si la contribution de la première couche a été identifiée comme étant significative,
- si la contribution de la première couche a été identifiée comme étant non significative, détermination si la contribution de la deuxième couche est significative en vérifiant qu'elle est supérieure à un troisième seuil de scintillation,
- comptage d'une particule β issue du tritium, si la contribution de la deuxième couche a été identifiée comme étant significative.

L'invention concerne en outre une cellule de scintillation pour la détection de rayonnements ionisants d'un fluide potentiellement radioactif, selon la revendication 6, la cellule de détection comprenant :
- au moins un premier guide d'onde comprenant au moins une surface, la surface étant recouverte d'une première couche d'un premier matériau de scintillation.
la cellule de scintillation comprend en outre une deuxième couche d'un deuxième matériau de scintillation recouvrant la première couche, l'épaisseur de la deuxième couche étant comprise entre 1 fois et 4 fois le parcours moyen d'une particule β issue du tritium dans le deuxième matériau de scintillation, le premier et le deuxième matériau de scintillation présentation au moins une caractéristique de scintillation différente l'un de l'autre de manière à permettre la distinction de leur contribution respective,
la deuxième couche étant destinée à être en contact avec le fluide.

Avec une telle cellule de scintillation, les particules β issues du tritium n'interagissent qu'avec la deuxième couche alors que les autres rayonnements ionisants, tels que les particules non issues du tritium ou les particules α issues du radon 222 ou du thoron, présentent une énergie suffisante pour interagir à la fois avec la première et la deuxième couche. Ainsi en cas de détection d'un signal de scintillation uniquement présent sur la contribution de la deuxième couche, la contribution de la première couche de participant pas au signal de scintillation, ce signal de scintillation ne peut avoir pour origine qu'une particule β issues du tritium. Il est donc possible avec une telle cellule de scintillation de distinguer les signaux de scintillation qui ont pour origine les particules β issues du tritium des signaux de scintillation qui ont pour origine les rayonnements ionisants autres que les particules β issues du tritium.

On notera de plus, qu'il est possible avec une telle cellule de discriminer le signal de scintillation de certaines particules α issues du radon 222 ou du thoron qui interagir uniquement avec la deuxième couche vis-à-vis de celui des particules β issues du tritium.

La caractéristique de scintillation différente entre le premier et le deuxième matériau de scintillation peut être une caractéristique temporelle de scintillation.

De cette manière, il est aisé de séparer la contribution respectivement du premier et du deuxième matériau ceci au moyen de leur comportement temporelle distinct. De plus cette discrimination ne nécessite pas l'utilisation de plusieurs dispositifs de mesure optique pour mesurer le signal de scintillation, puisqu'un seul dispositif de mesure permet de capturer les deux contributions.

La caractéristique temporelle de scintillation peut être choisie parmi la constante de temps de montée de la scintillation et la constante de temps de suppression de la scintillation et la somme des deux, le premier matériau de scintillation présentant une valeur de la caractéristique temporelle de scintillation supérieure à celle du deuxième matériau de scintillation.

Avec une telle caractéristique permet de différencier la contribution de la première et de la deuxième couche par une différence de pente dans le signal de scintillation. Cette différence de pente apparaît soit dans la montée du signal de scintillation, si la caractéristique temporelle de scintillation choisie est la constante de temps de montée de la scintillation, soit dans la baisse du signal de scintillation, si la caractéristique temporelle de scintillation choisie est la constante de temps de suppression de la scintillation.

La caractéristique temporelle de scintillation peut être la constante de temps de suppression de la scintillation, le premier matériau de scintillation présentant une constante de temps de suppression de la scintillation supérieure à celle du deuxième matériau de scintillation.

La caractéristique de scintillation différente entre le premier et le deuxième matériau de scintillation peut être la longueur d'onde de scintillation.

Une telle caractéristique de scintillation différente permet de différencier directement la contribution au signal de scintillation de la première couche par rapport à la contribution au signal de scintillation de la deuxième couche. En effet, un simple filtrage optique permet de séparer les deux contributions l'une par rapport à l'autre.

La cellule de détection peut comprendre une enceinte dans laquelle est destiné à être introduit le fluide potentiellement radioactif, et dans lequel le premier guide d'onde est formé d'une plaque s'étendant le long d'un chemin d'écoulement du fluide dans l'enceinte.

La surface du premier guide d'onde peut être formée par un premier et une deuxième face de la plaque, chacune des première et deuxième faces présentant la première et la deuxième couche.

Avec une telle configuration du guide d'onde, l'interaction entre le fluide et le guide d'onde, et les première et deuxième couches qui le recouvrent, est optimisée puisqu'elle peut se faire au moyen des deux faces du guide d'onde.

la cellule de scintillation peut comporter en outre au moins un deuxième guide d'onde comprenant au moins une surface, la surface du deuxième guide d'onde «étant recouverte par une première et une deuxième couche sensiblement identiques à celles du premier guide d'onde, le premier et le deuxième guide d'onde permettant de définir au moyen de leur surface respective un chemin d'écoulement du fluide.

De cette manière, il est possible d'avoir une interaction fluide/guide d'onde augmentée vis-à-vis d'une cellule ne comportant qu'un seul guide d'onde. Il sera donc possible de détecter l'activité d'un fluide avec un seuil d'activité détectable abaissé vis-à-vis d'une cellule ne comportant qu'un seul guide d'onde.

L'invention concerne également un ensemble de détection pour la détection de rayonnements ionisants d'un fluide potentiellement radioactif, selon la revendication 13, comprenant une cellule de scintillation et au moins un système de mesure optique pour enregistrer un signal de scintillation généré dans la cellule de scintillation, la cellule de scintillation étant une cellule selon l'invention et le système de mesure optique permettant de séparer les contributions respective de la première et la deuxième couche au signal de scintillation.

Un tel ensemble permet de mesurer le signal d'une cellule de scintillation selon l'invention tout en bénéficiant des capacités de discrimination de la cellule selon l'invention.

Le système de mesure optique peut permettre un enregistrement redondant du signal de scintillation.

Un tel enregistrement redondant permet une suppression du bruit thermique qui pourrait apparaitre lors de l'enregistrement des signaux de scintillation et qui pourrait éventuellement être identifié comme un signal de scintillation.

La cellule de scintillation étant une cellule dans laquelle la caractéristique de scintillation différente entre le premier et le deuxième matériau de scintillation est une longueur d'onde de scintillation,

le système de mesure optique peut comprendre une première et une deuxième unité configurées pour enregistrer respectivement le signal de scintillation à la longueur d'onde correspondant au premier et au deuxième matériau.

Avec une telle configuration, il est aisé de séparer la contribution de la première couche de celle de la deuxième couche.

L'ensemble de détection peut comporter une unité de traitement pour traiter le signal de scintillation et ainsi permettre l'identification de la part du signal de scintillation qui est lié aux particules β issues du tritium, l'unité de traitement comportant
- un module de conversion analogique/numérique afin de récupérer le signal de scintillation en sortie du dispositif de mesure optique,
- un module de détection pour identifier la particule/photon à l'origine du signal de scintillation à partir du signal numérisé par le module de conversion,

Le module de détection étant configuré pour la mise en œuvre d'un procédé de détection comprenant les étapes suivantes :
- E1 mise en contact du fluide avec la deuxième couche 233,
- E2 détection et enregistrement d'un signal de scintillation,
- E3 séparation du signal de scintillation enregistré en une première et une deuxième contribution respectives de la première et de la deuxième couche,
- E4 détection d'une particule β issue du tritium si la contribution de la première couche est inférieure à un seuil de détection d'un rayonnement et si la somme des contributions de la première et de la deuxième couche est inférieure à un premier seuil de scintillation correspondant à la détection d'une particule α issue du radon 222 ou du thoron.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 illustre schématiquement un ensemble de détection équipé d'une cellule de scintillation selon l'invention,
- la figure 2 illustre schématiquement la cellule de scintillation équipant le dispositif de la figure 1, celle-ci étant connectée à un photomultiplicateur et à une unité de traitement,
- la figure 3 illustre une vue rapprochée de la cellule de scintillation permettant de montrer des guides d'onde de cette dernière,
- la figure 4 illustre la variation temporelle en intensité du signal de scintillation d'une cellule de scintillation selon les figures 2 et 3 lorsqu'une particule α issue du radon 222 interagit avec l'un des guides d'onde de la cellule de scintillation,
- la figure 5 illustre la variation temporelle en intensité du signal de scintillation d'une cellule de scintillation selon les figures 2 et 3 lorsqu'une particule β non issue du tritium ou qu'un photon γ interagit avec l'un des guides d'onde de la cellule de scintillation,
- la figure 6 illustre la variation temporelle en intensité du signal de scintillation d'une cellule de scintillation selon les figures 2 et 3 lorsqu'une particule β issue du tritium interagit avec l'un des guides d'onde de la cellule de scintillation,
- la figure 7 illustre les sous-étapes de détection d'une particule β issue du tritium adaptées pour permettre l'identification d'un rayonnement ionisant correspondant à un signal de scintillation préalablement détecté,
- la figure 8 est un ordinogramme d'un procédé de détection de particule β du tritium selon l'invention,
- la figure 9 illustre une configuration de la cellule de scintillation d'un ensemble de détection selon un deuxième mode de réalisation dans laquelle la cellule de scintillation est connectée à un premier et un deuxième photomultiplicateur,
- la figure 10 illustre les sous-étapes de détection d'un signal de scintillation permettant de rejeter le bruit thermique des photomultiplicateurs.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

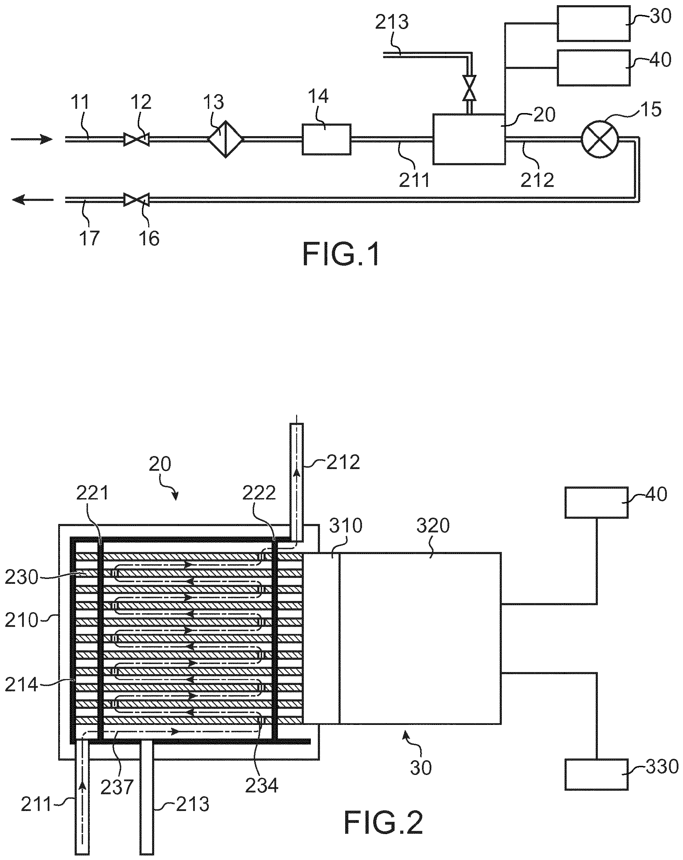

La figure 1 illustre un ensemble de détection 1 pour la détection de rayonnements ionisants dans un fluide, et en particulier les particules β issues du tritium, ledit dispositif étant équipé d'une cellule de scintillation 20 selon l'invention.

Si un tel ensemble de détection 1 vise en particulier les fluides gazeux, tels que l'air présent dans l'environnement ou dans les installations nucléaires, ce dispositif peut aisément être adapté pour les fluides liquides. Ainsi, si dans le cadre de ce document, les dimensions de la cellule de scintillation, et en particulier des guides d'onde qui l'équipent, sont données pour la détection de rayonnements ionisants dans un fluide gazeux, l'homme du métier est à même, sur la base de l'enseignement de ce document, d'adapter les dimensions de la cellule de scintillation pour permettre la détection de rayonnements ionisants dans un fluide liquide.

Un tel ensemble de détection 1 comporte successivement dans le sens de circulation du fluide dans ce dernier et en communication fluidique les uns avec les autres:
- une entrée de prélèvement 11 du fluide pour permettre la récupération du fluide,
- une vanne 12 de mise en circulation permettant la mise en circulation du fluide dans l'ensemble de détection,
- un filtre aérosol 13 pour retenir les particules de manière à limiter la contamination de la cellule de scintillation, le filtre aérosols pouvant être sélectionné dans le groupe comportant les filtres zéolite et les filtres au charbon actif,
- un déshumidificateur 14 pour assécher le fluide et ainsi limiter les phénomènes de condensation dans la cellule de scintillation,
- la cellule de scintillation 20 en elle-même, cette dernière étant également reliée à un circuit de purge 213 pour y introduire un fluide sec et non rayonnant,
- une pompe 15 pour assurer la circulation du fluide prélevé dans l' ensemble de détection,
- une vanne 16 de sortie permettant l'évacuation du fluide,
- une sortie de fluide 17 pour évacuer le fluide après la mesure du rayonnement ionisant.

Un tel ensemble de détection 1 comporte en outre, comme illustré sur les figures 1 et 2, un système de mesure optique 30 relié à la cellule de scintillation 20 pour récupérer le signal de scintillation, et une unité de traitement 40 pour traiter le signal de scintillation et ainsi permettre l'identification de la part du signal de scintillation qui est lié aux particules β issues du tritium.

Comme le montre la figure 2, l'enceinte de scintillation 20 comporte :
- une enceinte 210 fermée comprenant une entrée de fluide 211, une sortie de fluide 212 et une canalisation du circuit de purge 213,
- une première et une deuxième traverse 221, 222 s'étendant parallèlement l'une à l'autre entre deux parois opposées de l'enceinte fermée 210,
- une pluralité de guides d'onde 230 définissant dans l'enceinte 210 un chemin d'écoulement du fluide 237, les guides d'onde étant montés au moyen de la première et de la deuxième traverse 221, 222 et étant en contact optique avec un guide de collecte 310 pour collecter le signal de scintillation généré par lesdits guides d'onde 230.

L'enceinte 210 définit un volume de mesure dans lequel est injecté le fluide dont le rayonnement ionisant doit être détecté/identifié. Le dimensionnement de l'enceinte 210 est suffisant pour permettre la formation, à partir des guides d'onde, d'un chemin d'écoulement permettant d'enregistrer l'activité du fluide. Ainsi, dans une configuration classique nullement limitative, l'enceinte peut être une enceinte parallélépipédique rectangle avec chacune de ses dimensions comprise entre 5 et 25 cm.

L'enceinte 210, mis à part l'entrée de fluide 211, la sortie de fluide 212 et la canalisation de purge 213, est fermée hermétiquement de manière à permettre la récupération du signal de scintillation du fluide sans risque de contamination extérieure. Cette fermeture hermétique est assurée par des parois 214 de l'enceinte 210 délimitant une cavité ouverte, et le guide de collecte 310 qui vient fermer l'ouverture de la cavité. Les parois 214 peuvent être réfléchissantes de manière à assurer une collecte de l'ensemble de signaux de scintillation générés au niveau des guides d'onde 230. Une telle réflectivité des parois 214 peut être fournie au moyen d'un revêtement tel qu'un Polytétrafluoroéthylène, connu sous son sigle PTFE, ou une couche d'oxyde de titane.

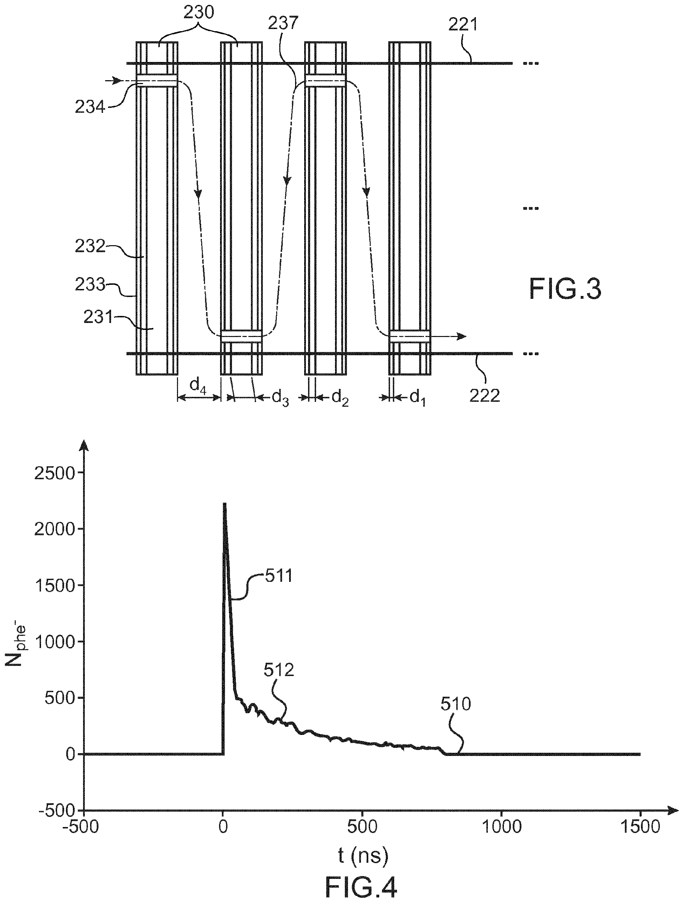

La figure 3 montre une vue rapprochée des guides d'onde 230 afin d'illustrer leur configuration. Chaque guide d'onde 230 comporte :
- un corps 231 adapté pour guider le signal de scintillation en direction du guide de collecte 310,
- une première couche 232 d'un premier matériau de scintillation, la première couche 232 recouvrant la surface du corps 231,
- une deuxième couche 233 d'un deuxième matériau de scintillation, la deuxième couche 233 recouvrant la première couche 232,
- un passage de fluide 234 traversant le corps 231 de manière à permettre un passage de fluide.

Le corps 231 se présente sous la forme d'une plaque planaire dont la première et la deuxième face forment la surface du corps 231. Le corps 231 est réalisé dans un matériau sensiblement transparent aux longueurs d'onde de scintillation du premier et du deuxième matériau de scintillation, tel qu'un verre de silice, un quartz ou un polymère transparent. Afin de favoriser le confinement du signal de scintillation dans le corps 231, le matériau du corps présente préférentiellement un indice de réfraction relativement important, c'est-à-dire supérieur à 1, préférentiellement à 1,5 voire à 2.

Le corps 231 présente une longueur et une largeur sensiblement identiques aux dimensions internes des parois 214 de l'enceinte 210 parallèlement auxquelles le guide d'onde 230 est placé. L'épaisseur du corps 231 est préférentiellement choisie de manière à garantir la rigidité du corps tout en limitant l'espace occupé par le corps 231. Typiquement, l'épaisseur d3 du corps 231 est comprise entre 1 mm et 4 mm, voire 1,5 mm et 3 mm et préférentiellement égale à 2 mm.

Le corps 231 de chacun des guides d'onde 230 est muni du passage de fluide 234 au niveau de l'une de ces extrémités longitudinales. Un guide d'onde 230 présente le passage de fluide 234 au niveau de l'extrémité de son corps 231 qui est à l'opposé du passage de fluide 234 du guide d'onde 230 qui le précède directement et de celui du guide d'onde 230 qui le succède directement.

De cette manière avec une entrée de fluide 211 et une sortie de fluide 212 disposées à l'opposé l'une de l'autre dans l'enceinte 210, les guides d'onde 231 définissent, comme le montre les figures 2 et 3, un chemin de fluide qui serpente le long de chacune des faces des corps de guide d'onde en optimisant l'interaction entre la surface des guides d'onde 230 et le fluide.

Pour optimiser cette interaction, l'espacement d4 entre deux guides d'onde successifs peut être choisi en fonction de la distance de parcours moyen d'une particule β issue du tritium dans le fluide. Typiquement, pour un fluide gazeux, tel que de l'air, l'espacement entre deux guides d'onde 230 successifs peut être choisi comme étant compris entre 0,5 à 4 fois la distance de parcours moyen d'une particule β issue du tritium dans l'air, c'est-à-dire entre 3 mm et 24 mm. Généralement, cet espacement d4 est choisi comme étant compris entre 1 et 2 fois la distance de parcours moyen d'une particule β issue du tritium, voire 1,5 fois cette distance, c'est-à-dire entre 6 mm et 12 mm, voire 4,5 mm. On notera, en effet, que le parcours moyen d'une particule β issue du tritium dans l'air est de 6 mm.

Chacun des corps présente sa surface, c'est-à-dire ses deux faces, recouverte de la première et la deuxième couche 232, 233. La première et la deuxième face de chaque corps 231 est entièrement recouverte de la première couche 232, cette dernière étant également recouverte par deuxième couche 231.

De cette manière, toute particule d'énergie suffisante rayonnée par le fluide en direction d'un guide d'onde 230 traversera successivement la deuxième couche et la première couche 232, 233 générant dans chacune d'entre elles une part du signal de scintillation.

La deuxième couche 233 présente une épaisseur d1 comprise entre 1 et 4 fois le parcours moyen d'une particule β issue du tritium dans le deuxième matériau, cette épaisseur étant préférentiellement inférieure à deux fois le parcours moyen d'une particule β issue du tritium dans le deuxième matériau, voire égale à ce même parcours moyen. Pour un matériau polymère classique de scintillation, telle que Polyvinyltoluène, le parcours moyen d'une particule β issue du tritium est de 6 µm. Ainsi l'épaisseur de la deuxième couche 233 peut être choisie, lorsque la deuxième couche est constituée d'un tel polymère, entre 6 µm et 24 µm, voire entre 6 µm et 12 µm.

L'épaisseur de la première couche 232 est comprise entre 50 µm et 1 mm.

Le premier et deuxième matériau sont des matériaux de scintillation présentant au moins une caractéristique de scintillation différente l'une de l'autre de manière à permettre la distinction de la contribution respective au signal de scintillation de la première et de la deuxième couche 232, 233.

Dans ce premier mode de réalisation, le premier et le deuxième matériau se distingue par une variation temporelle de la scintillation distincte l'une de l'autre, le premier matériau présentant une constante de temps de suppression de la scintillation supérieure à celle du deuxième matériau. De cette manière, il n'y a pas ou peu de recouvrement temporel entre les contributions de la première et de la deuxième couche 232, 233 au signal de scintillation lors de la détection d'un rayonnement ionisant. Il est donc aisé de décomposer le signal de scintillation pour séparer la contribution de la première et deuxième couche 232, 233.

En variante, le premier et le deuxième matériau peuvent se distinguer par une variation temporelle de la scintillation distincte l'une de l'autre, le premier matériau présentant une constante de temps de montée de la scintillation supérieure à celle du deuxième matériau.

Dans une configuration idéale, le deuxième matériau présente la somme de sa constante de temps de montée de la scintillation, connue sous la dénomination anglaise « rise time » et de sa constante de temps de suppression de la scintillation, connue sous la dénomination anglaise « decay time », qui est inférieure à la constante de montée de la scintillation du premier matériau.

Une telle configuration peut par exemple être obtenue aux moyens de matériaux de scintillation commerciaux à base de Polyvinyltoluène tels que ceux commercialisés par Saint-Gobain™ sous les références BC-404™ et BC-444™. En effet, le matériau BC-404™ présente une constante de montée de la scintillation et une constante de durée de suppression de la scintillation qui sont respectivement égaux à 0,7 ns et 2,1 ns, tandis que le matériaux BC-444™ présente pour ces mêmes constantes les valeurs respectives de 19.5 ns et 285 ns. Ainsi le premier matériau peut être le matériau BC-444™, le deuxième matériau étant le matériau BC-404™.

Avec une telle configuration, lorsqu'un rayonnement ionisant est intercepté par le guide d'onde 230, ce rayonnement ionisant pénètre la deuxième couche 233 et, s'il possède l'énergie suffisante, la première couche 232 en générant lors de ce trajet un signal de scintillation. La première couche et la deuxième couche présentant des caractéristiques temporelles de scintillation différentes l'une de l'autre, le signal de scintillation présente une première partie correspondant à la contribution de la deuxième couche 233, et une deuxième partie correspondant à la contribution de la première couche 234 qui peuvent être séparées l'une de l'autre en définissant deux plages temporelles. Ce signal de scintillation généré à la surface du guide d'onde 230 est ensuite en partie capturé par les guides d'onde 230, pour une partie directement par le guide d'onde en question, pour le reste en étant intercepté par les autres guides d'onde que ce soit directement ou après réflexion sur les parois 214 de l'enceinte 210.

Chacun des guides d'onde 230 présente l'une de ses extrémités, celle orientée en direction de l'ouverture de la cavité délimitée par les parois 214, qui est en contact optique avec le guide de collecte 310. Afin de permettre une collection optimisée le guide de collecte présente un indice de réfraction égal ou supérieur à celui du corps 231 des guides d'onde 230.

Le guide de collecte 310 guide le signal de scintillation ainsi récupéré vers un dispositif de mesure optique 321, tel qu'un photomultiplicateur, pour enregistrer la variation temporelle du signal de scintillation. Le dispositif de mesure optique 321 est un transducteur optoélectronique configuré pour transformer le signal de scintillation optique en un signal électrique apte à être traité par l'unité de traitement 40. Dans une configuration usuelle de l'invention, et en raison de la faible intensité du signal de scintillation, les photomultiplicateurs sont à préférer. Bien entendu, d'autres dispositifs de mesure optique, tels que des photodiodes refroidies à basse température, peuvent être utilisées dans la mesure où ils possèdent une sensibilité suffisante. La figure 2 illustrant une configuration usuelle de l'invention dans laquelle le dispositif de mesure optique 320 est un photomultiplicateur, elle figure une alimentation haute tension 330 afin d'alimenter le photomultiplicateur.

Le dispositif optique 320, son alimentation haute tension 330 et le guide de collecte 310 forment ensemble un système de mesure optique 30 optique pour détecter et enregistrer le signal de scintillation de la cellule de scintillation 20.

Ainsi, avec une telle cellule de scintillation 20, il est possible de distinguer les contributions des première et deuxième couches 232, 233 et de déterminer le type de particules ou photons à l'origine d'un signal de scintillation. En effet, comme le montre les figures 4 à 6, le signal de scintillation 510, 520, 530, en nombre de photon-électrons, obtenu avec une telle cellule présente une dépendance temporelle qui est fonction de l'énergie des particules ou photons à l'origine de ce signal.

En effet, pour une particule à forte énergie telle qu'une particule α issue du radon 222 ou thoron, on peut voir sur la figure 4 que l'on distingue deux composantes distinctes, un premier pic 511 de forte intensité et présentant une décroissance rapide correspondant à la contribution de la deuxième couche 233 et un épaulement 512 correspondant à la contribution de la première couche 232. On peut également observer que la contribution de la deuxième couche 233 correspond à une plage de temps s'étalant sur une durée d'environ 35 ns tandis que la contribution de la première couche 232 d'étale sur une plage de temps allant jusqu'à environ 750 ns. De cette manière, en définissant une première plage temporelle allant d'un instant 0, correspondant à la détection d'un signal de scintillation, jusqu'à t1 égal à 50 ns après l'instant 0, il est possible d'obtenir la contribution de la deuxième couche 233, et en définissant une deuxième plage de temps allant de t1 jusqu'à t2 égal à 1 µs après l'instant 0, il est possible d'obtenir la contribution de la première couche 232.

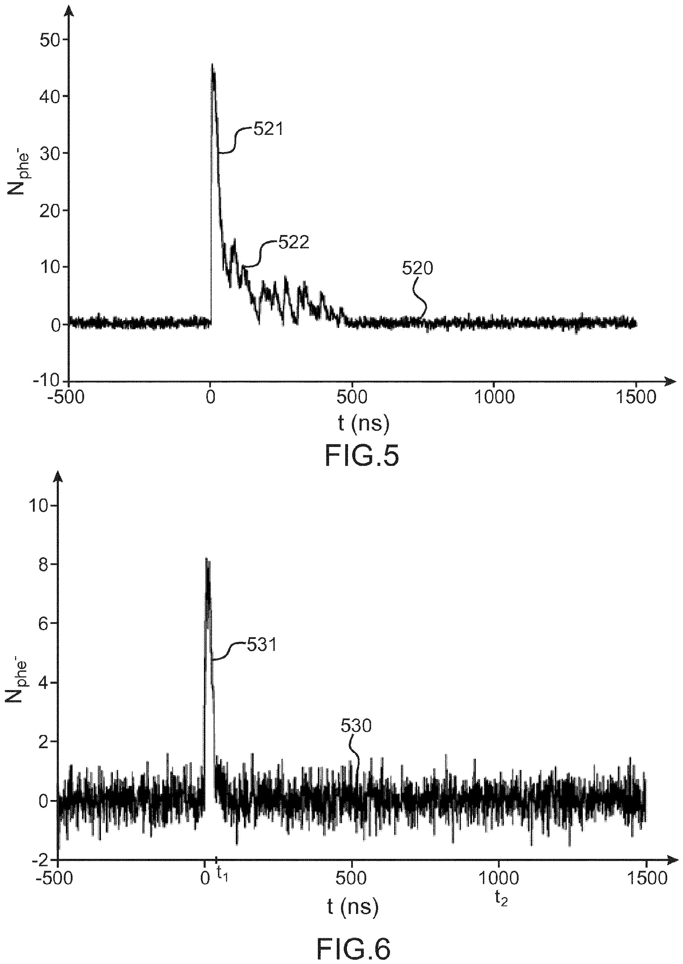

De la même façon, pour une particule ou un photon d'énergie intermédiaire, tel qu'une particule β non issue du tritium ou un photon y, leur énergie est suffisante pour permettre une interaction avec la première et la deuxième couche 232, 233. Ainsi, avec une telle particule, le signal de scintillation 520 de la cellule de scintillation 20 illustré sur la figure 5 présente une variation similaire à celle observée pour le signal de scintillation 510 d'une particule de forte énergie, les signaux 510, 520 se différentiant principalement par leur intensité respective. Le signal de scintillation présente donc un pic 521 correspondant à la contribution de la deuxième couche 233 et un épaulement 522 correspondant à la contribution de la première couche 232. La première et la deuxième plage [0,t1] et [t1, t2] permettent donc ici encore de séparer les différentes contributions de la première et de la deuxième couche 232, 233.

Pour une particule β issue du tritium, la variation du signal de scintillation se distingue. En effet, de par la conception de la cellule de scintillation et du dimensionnement de la deuxième couche 233, l'énergie des particules β issue du tritium n'est pas suffisante pour que ces dernières puissent interagir avec la première couche 232, ces particules étant piégées dans la deuxième couche 233. Ainsi, on peut voir sur la figure 6 que si le signal de scintillation 530 d'une telle particule présente bien un pic 531 correspondant à la contribution de la deuxième couche 233, par contre il ne comporte pas, en l'absence d'interaction avec la première couche 232, d'épaulement correspondant à la contribution de la première couche 232. Le signal de scintillation d'une particule β issue du tritium se trouve donc uniquement dans la première plage [0, t1].

Bien entendu, les valeurs t1 et t2 données ci-dessus sont valables pour les exemples de premier et deuxième matériau préalablement donné, c'est-à-dire les matériaux BC-404™ et BC-444™ commercialisés par Saint Gobain™. Si d'autres matériaux sont utilisés en tant que premier et deuxième matériau, les temps t1 et t2 doivent être corrigés pour correspondre aux caractéristiques de scintillation de ces matériaux. On peut noter également, dans le cas de premier et deuxième matériaux présentant des caractéristiques de scintillation proches, il est également envisageable que l'unité de traitement soit configurée pour effectuer un calcul de décomposition afin de décomposer le signal de scintillation pour récupérer les contributions respectives de la première et deuxième couches 232, 233.

De cette manière, l'unité de traitement 40, en étant agencée pour récupérer le signal de scintillation après sa conversion par le système de mesure optique 30, est à même d'analyser les signaux de scintillation pour déterminer le type de particules détectées. A cet effet, l'unité de traitement 40 peut comporter :
- un module de conversion analogique/numérique afin de récupérer le signal de scintillation en sortie du dispositif de mesure optique 320,
- un module de détection pour identifier la particule/photon à l'origine du signal de scintillation à partir du signal numérisé par le module de conversion,
- un module de comptage pour compter les particules/photons identifiés par le module de détection.

Chacun des modules de l'unité de traitement 40 peut être un module électronique indépendant, un sous-module d'un appareillage dédié ou encore un module d'un programme d'ordinateur exécuté sur un ordinateur.

Dans une configuration usuelle de l'invention, le module de conversion et le module de détection sont des modules électroniques dédiés, le module de comptage étant mis en œuvre au moyen d'un programme d'ordinateur exécuté sur un ordinateur relié au module de détection. Cette configuration est à préférer en raison de la fréquence d'acquisition nécessaire dans le cadre de l'invention.

Le module de conversion, afin de fournir une numérisation parfaitement adaptée, permet un échantillonnage à une fréquence supérieure ou égale à 250 MHz sur au moins 8 bits.

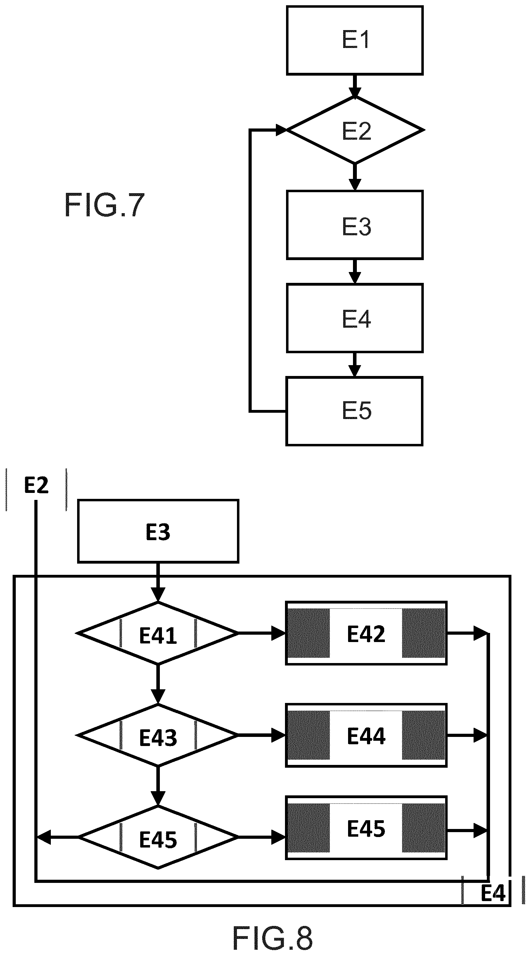

Le module de détection est configuré pour la mise en œuvre d'un procédé de détection comprenant, comme illustré sur la figure 7, les étapes suivantes :
- E1 mise en contact du fluide avec la deuxième couche 233,
- E2 détection et enregistrement d'un signal de scintillation,
- E3 séparation du signal de scintillation enregistré en une première et une deuxième contribution 511, 521 531, 512, 522 respectives de la première et de la deuxième couche 232, 233,
- E4 détection d'une particule β issue du tritium si la contribution de la première couche 232 est inférieure à un seuil de détection d'un rayonnement et si la somme des contributions de la première et de la deuxième couche est inférieure à un premier seuil de scintillation correspondant à la détection d'une particule α issue du radon 222 ou du thoron.

Ainsi le module de détection est plus précisément configuré pour mettre en œuvre les étapes E2 à E4 après introduction du fluide dans la cellule de scintillation 20.

Lors de l'étape E2, l'enregistrement du signal de scintillation est réalisé sur une durée suffisante pour couvrir les première et deuxième plages de temps [0,t1][t1,t2]. Ainsi, pour une valeur de t2 fixée à 1 µs, le signal de scintillation une fois détecté est enregistré pendant un temps de 1 µs. Dans l'étape E3 et dans le cadre des exemples de premier et deuxième matériau précédemment donné, le signal de scintillation enregistré est séparé à partir des première et deuxième plages de temps entre une contribution correspondant à la deuxième couche 232, c'est-à-dire celle enregistrée dans la plage [0,t1], et une contribution de la deuxième couche, c'est-à-dire celle enregistrée dans la plage [t1,t2]. Selon cette possibilité, la détermination de ces contributions peut consister en une intégration du signal de scintillation sur chacune de ces plages de temps, ou encore une mesure de l'intensité maximale du signal de scintillation sur ces mêmes plages, la première possibilité étant à préférer.

Bien entendu, la séparation du signal de scintillation en une contribution de la première couche 232 et une contribution de la deuxième couche 233 peut être réalisée différemment sans que l'on sorte du cadre de l'invention. Ainsi, par exemple et comme précédemment indiqué, le module de détection peut parfaitement être adapté pour mettre en œuvre une décomposition du signal de scintillation sur la base de deux fonctions temporelles de variation du signal de scintillation propres au premier et deuxième matériau.

A partir des contributions respectives des première et deuxième couches 232, 233 ainsi déterminées dans l'étape E3, l'étape E4 peut permettre la détection d'une particule β issue du tritium. En effet, l'étape E4 peut consister à déterminer que la contribution de la première couche est non significative en vérifiant, par exemple que la contribution de la première couche est inférieure à un seuil de scintillation (par exemple si la contribution au signal de scintillation enregistré est inférieure à 20 keV, voire à 10 keV). Si pendant cette étape, une particule β issue du tritium est détectée, le module transmet alors l'information au module de comptage afin que ce dernier incrémente le compteur de particule β issue du tritium.

Selon une variante de l'invention, l'étape E4 peut permettre la détection d'une particule β issue du tritium par une détermination de la nature du rayonnement ionisant à l'origine du signal de scintillation détecté à l'étape E2.

Une telle étape E4 selon cette variante comporte alors les sous-étapes suivantes :
- E41 détermination si la somme des contributions de la première et la deuxième couche 232, 233 est supérieure au premier seuil de scintillation caractéristique d'une particule α issue du radon 222 ou du thoron,
- E42 comptage d'une particule α issue du radon 222 ou du thoron si la somme des contributions de la première et deuxième couche a été déterminée comme supérieure au premier seuil de scintillation caractéristique d'une particule α issue du radon 222 ou du thoron, et retour à l'étape E2 pour la détection d'un autre signal de scintillation,
- E43 si la somme des contributions de la première et deuxième couche a été déterminée à l'étape E41 comme inférieure à un premier seuil de scintillation, détermination si la contribution de la première couche 232 est significative en vérifiant qu'elle est supérieure à un deuxième seuil de scintillation,
- E44 comptage d'une particule β non issue du tritium ou d'un photon y, si la contribution de la première couche 232 a été identifiée comme étant significative, et retour à l'étape E2 pour la détection d'un autre signal de scintillation,
- E45 si la contribution de la première couche 232 a été identifiée comme étant non significative, détermination si la contribution de la deuxième couche 233 est significative en vérifiant qu'elle est supérieure à un troisième seuil de scintillation, retour à l'étape E2 si la contribution de la deuxième couche 233 n'est pas significative,
- E46 comptage d'une particule β issue du tritium, si la contribution de la deuxième couche 233 a été identifiée comme étant significative, et retour à l'étape E2 pour la détection d'un autre signal de scintillation.

Pour les étapes E41, E43, E45, les seuils de scintillation peuvent être définis comme suit :
- le premier seuil de scintillation correspond à une énergie déposée par la particule/photon dans les première et deuxième couches 232, 233 de 100 keV,
- le deuxième seuil de scintillation correspond à une énergie déposée par la particule/photon dans la première couche 232 de 20 keV, voire 10 keV,
- le troisième seuil de scintillation correspond à une énergie déposée par la particule/photon dans la deuxième couche 233 de 1 keV, voire 500 eV.

Selon une telle variante, le module de détection est configuré pour transmettre au module de comptage la nature du rayonnement identifié lors des étapes E42, E44, et E46 pour que ce dernier incrémente le compteur correspondant à la particule ou photon identifié. Selon cette variante, le module de comptage comporte donc trois compteurs correspondant à respectivement les particules α issues du radon 222 ou du thoron, les particules β non issues du tritium et photons y, et les particules β issues du tritium.

Les étapes E2 à E5 sont répétées pendant une durée d'échantillonnage Δt donnée, généralement définie en fonction de l'activité attendue du fluide. Dans une configuration classique Δt peut être choisie comme étant comprise entre 100 ms et 1s, voire 150 ms et 500 ms et préférentiellement égale à 250 ms. Après l'écoulement de la durée d'échantillonnage Δt la valeur du ou des compteurs est indiquée à un éventuel opérateur et éventuellement stockée pour une consultation ultérieure. Le ou les compteurs sont ensuite réinitialisés de manière à effectuer un nouvel échantillonnage.

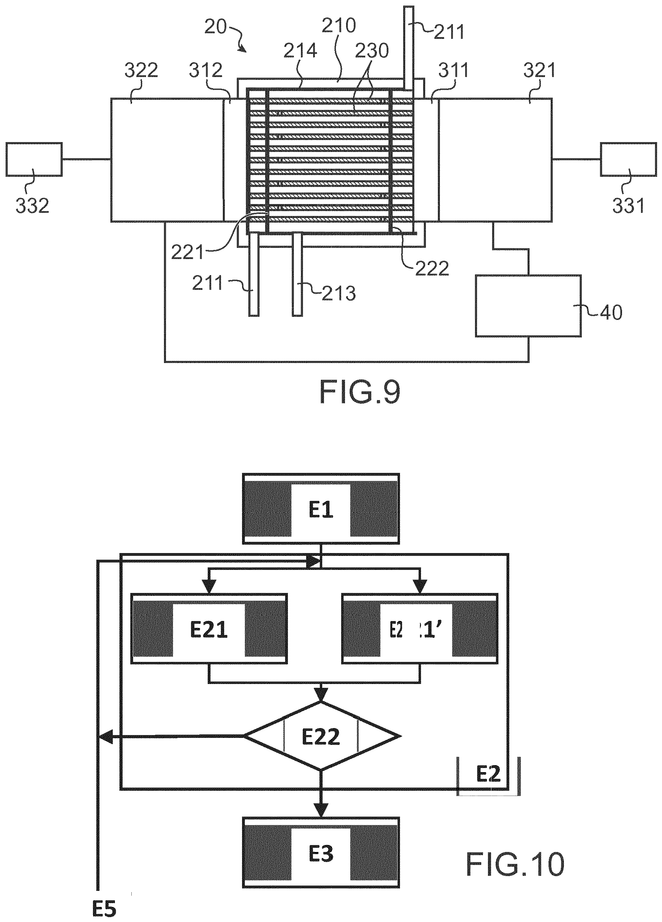

La figure 9 illustre la configuration d'une cellule de scintillation équipant un ensemble de détection 1 selon un deuxième mode de réalisation dans lequel le système de mesure optique est configuré pour permettre une mesure redondante des signaux de scintillation. Un ensemble de détection 1 selon ce deuxième mode de réalisation se différencie d'un dispositif selon le premier mode de réalisation en ce que la cavité délimitée par les parois 214 présente une première et une deuxième ouverture fermées respectivement par un premier et un deuxième guide de collecte 311, 312, et en ce que le système de mesure optique comporte un premier et un deuxième dispositif de mesure optique 321, 322 chacun relié à une alimentation haute tension 331, 332 qui lui est propre.

Le premier et le deuxième guide de collecte 321, 322 présentent une configuration similaire à celle du guide d'onde de collecte 320 équipant la cellule de scintillation selon la configuration du premier mode de réalisation. Ainsi le premier et le deuxième guide de collecte 321, 322 sont en contact optique avec une extrémité respective de chacun des guides d'onde 230 de manière à permettre audits guides de collecte 321, 322 de collecter le signal de scintillation de la cellule de scintillation 20.

Avec une telle configuration redondante, chacun des premier et deuxième dispositifs de mesure optique 321, 322 est à même de détecter une part du signal de scintillation lorsqu'un rayonnement ionisant interagit avec l'un des guides d'onde 230. Ainsi, tout signal de scintillation sera détecté à la fois par le premier et le deuxième dispositif optique 321 et 322. Il est donc possible avec une telle configuration de limiter, voire supprimer, les perturbations thermiques des photomultiplicateurs qui pourraient éventuellement être identifiées comme des signaux de scintillation.

L'unité de traitement 40 peut ainsi être adaptée pour permettre une telle limitation des perturbations thermiques ceci au moyen d'un module de conversion permettant d'acquérir en parallèle les signaux de scintillation du premier et deuxième dispositif optique et d'un module de détection configuré pour vérifier que la concomitance des signaux de scintillation sur chacune des voies. Le module de conversion est préférentiellement configuré pour permettre une acquisition sur une première et une deuxième voie avec sur chacune des voies un échantillonnage à une fréquence supérieure ou égale à 250 MHz sur au moins 8 bits. Les deux voies sont transmises séparément au module de détection.

Le module de détection est configuré pour détecter un signal de scintillation uniquement si ce signal est détecté sensiblement simultanément sur la première et deuxième voie. Une telle configuration peut être réalisée au moyen d'une étape de détection E2 adaptée.

Une telle étape de détection E2 adaptée comporte, comme illustré sur la figure 10, les sous-étapes suivantes :
- E21 détection et enregistrement d'un signal de scintillation sur la première voie correspondant au premier dispositif de mesure optique 321,
- E21' détection et enregistrement d'un signal de scintillation sur la deuxième voie correspondant au deuxième dispositif de mesure optique 322,
- E22 vérification qu'une détection simultanée a eu lieu sur la première et la deuxième voie lors des sous-étapes E21 et E21', et détection d'un signal de scintillation uniquement si la détection est simultanée sur la première et deuxième voie, les signaux de la première et de la deuxième voie étant alors combinées ensemble de manière à fournir un signal de scintillation de la cellule de scintillation 20 avant de passer à l'étape E3 de séparation, et retour aux sous-étapes E21 et E21' si la détection simultanée n'a pas eu lieu sur la première et la deuxième voie.

Il est à noter que ci-dessus les sous-étapes E21 et E21' sont mises en œuvre simultanément pour permettre une détection simultanée du signal de scintillation sur la première et deuxième voie, et la vérification de simultanéité lors de la sous-étape E22.

Avec une telle configuration, les signaux de scintillation détectés sur la première et la deuxième voie ne peuvent donc pas avoir pour origine un bruit thermique. Il n'est donc pas nécessaire, lors de la sous-étape E45, de vérifier si la contribution de la deuxième couche 233 est significative en vérifiant qu'elle est supérieure à un troisième seuil de scintillation. Il est ainsi possible lors de l'étape E4 de supprimer la sous-étape E45 et de passer directement à l'étape E46 dans le cas où lors de la sous-étape E43 il a été identifié que la contribution de la première couche 232 n'était pas significative.

La figure 9 correspond également à la configuration d'une cellule de scintillation 20 équipant un ensemble de détection 1 selon un troisième mode de réalisation dans lequel la caractéristique de scintillation différente de la première et la deuxième couche 232, 233 n'est pas temporelle mais concerne la longueur d'onde de scintillation. Un tel ensemble de détection 1 se différencie d'un ensemble de détection selon le deuxième mode de réalisation de par les premier et deuxième matériau et de par une configuration du système de mesure optique 30 adapté pour permettre une première et une deuxième mesure parallèles du signal de scintillation, ces mesures étant sélectives en longueur d'onde pour permettre la distinction de la contribution de la première et de la deuxième couche 232, 233.

Ainsi dans ce troisième mode de réalisation, le premier et le deuxième matériau de scintillation sont choisis de manière à ce que le signal de scintillation du premier et deuxième matériau soit séparé en longueur d'onde, par exemple, avec un filtre optique, ou des dispositifs optiques favorisant la détection de l'un ou l'autre du signal de scintillation du premier et deuxième matériau.

Pour aboutir une telle caractéristique, le premier matériau peut par exemple être un matériau sélectionné parmi les matériaux commercialisés par Saint Gobain™ sous les références BC-444™ et BC-444G™, le deuxième matériau étant sélectionné dans l'autre parmi ces matériaux BC-444™ et BC-444G™. En effet, le matériau BC-444™ présente un signal de scintillation dans la gamme du violet (longueur d'onde maximale d'émission 428 nm) tandis que le matériau BC-444G™ présente un signal de scintillation centré sur le vert (longueur d'onde supérieure à 450 nm).

De manière à permettre un enregistrement simultané du signal de scintillation de la première et de la deuxième couche 232, 233, la cellule de scintillation et le système de mesure présente une configuration similaire à celle de l'ensemble de détection du deuxième mode de réalisation. Ainsi, une partie du signal de scintillation est collectée par le premier guide de collecte 311, le reste étant collecté par le deuxième guide de collecte 312. Le premier et le deuxième dispositif de mesure optique sont configurés pour respectivement enregistrer le signal de scintillation aux longueurs d'onde de scintillation de respectivement le premier et le deuxième matériau. Une telle configuration peut être fournie par la disposition d'un filtre optique adapté ou encore au moyen de photomultiplicateurs présentant une sensibilité variable en longueur d'onde

De manière similaire à l'ensemble de détection 1 selon le deuxième mode de réalisation, le module de conversion selon ce deuxième mode de réalisation est configuré pour permettre une acquisition sur une première et une deuxième voie avec préférentiellement sur chacune des voies un échantillonnage à une fréquence supérieure ou égale à 250 MHz sur au moins 8 bits. Les deux voies sont transmises séparément au module de détection.

Le module de détection selon ce troisième mode de réalisation se différencie en ce que l'étape E2 de détection consiste à détecter un signal de scintillation au moins sur la deuxième voie qui correspond à la deuxième couche 232 et en ce que l'étape E3 de séparation consiste à récupérer séparément le signal de scintillation de la première et de la deuxième voie.

Bien entendu, si dans les modes de réalisation décrits ci-dessous la cellule de scintillation comporte une pluralité de guides d'onde planaires, l'invention ne se limite pas à cette seule configuration. En effet, il est parfaitement envisageable dans le cadre de l'invention que l'enceinte soit pourvue de guides d'onde curviligne, voire même d'un unique guide d'onde curviligne s'étendant en éclipse selon une configuration similaire à celle décrite dans le document US 2599922.

## Revendications

1. Procédé de détection de rayonnements ionisants d'un fluide potentiellement radioactif au moyen d'une cellule de scintillation (20),
ladite cellule de scintillation comprenant :
- au moins un premier guide d'onde (230) comprenant au moins une surface, la surface étant recouverte d'une première couche (232) d'un premier matériau de scintillation,
- une deuxième couche (233) d'un deuxième matériau de scintillation recouvrant la première couche (232), l'épaisseur de la deuxième couche (233) étant comprise entre 1 fois et 4 fois le parcours moyen d'une particule β du tritium dans le deuxième matériau de scintillation, le premier et le deuxième matériau de scintillation présentent au moins une caractéristique de scintillation différente l'une de l'autre de manière à permettre la distinction de leur contribution respective, la deuxième couche (233)étant destinée à être en contact avec le fluide,
ledit procédé de détection comprenant les étapes suivantes :
- mise en contact du fluide avec au moins la deuxième couche (233),
- détection et enregistrement du signal de scintillation,
- séparation du signal de scintillation enregistré en une première et une deuxième contribution (C1, C2) respectives de la première et de la deuxième couche (232, 233),
- détection d'une particule β issue du tritium si la contribution de la première couche (232) est inférieure à un seuil de détection d'un rayonnement et si la somme des contributions de la première et de la deuxième couche est inférieure à un premier seuil de scintillation de détection d'une particule α issue du radon 222 ou du thoron.

2. Procédé de détection selon la revendication 1, dans lequel la caractéristique de scintillation différente entre le premier et le deuxième matériau de scintillation est une caractéristique temporelle de scintillation, la caractéristique temporelle de scintillation étant choisie parmi la constante de temps de montée de la scintillation et la constante de temps de suppression de la scintillation et la somme des deux, le premier matériau de scintillation présentant une valeur de la caractéristique temporelle de scintillation supérieure à celle du deuxième matériau de scintillation, et
dans lequel l'étape de détection et d'enregistrement du signal de scintillation consiste en une étape d'enregistrement de la variation temporelle du signal de scintillation pendant un temps donné (t2),
et dans lequel l'étape de séparation du signal de scintillation enregistré consiste en une séparation des contributions respectives de la première et la deuxième couche à partir d'une première et deuxième plage temporelle ([0,t1], [t1,t2]) définies à partir de la caractéristique de scintillation différente entre le premier et le deuxième matériau de scintillation.

3. Procédé de détection selon la revendication 1, dans lequel la caractéristique de scintillation différente entre le premier et le deuxième matériau de scintillation est la longueur d'onde de scintillation, et
dans lequel l'étape de détection et d'enregistrement du signal de scintillation consiste en une récupération du signal de scintillation aux longueurs de scintillation respectives du premier et du deuxième matériau de scintillation,
dans lequel l'étape de séparation du signal de scintillation enregistré consiste en une récupération respective et séparée du signal de scintillation aux longueurs d'onde de scintillation du premier et du deuxième matériau de scintillation.

4. Procédé de détection selon l'une quelconque des revendications 1 à 3, dans lequel lors de l'étape de détection d'une particule β du tritium, il est identifié la nature du rayonnement ionisant à l'origine du signal de scintillation détecté.

5. Procédé de détection selon la revendication 4, dans lequel l'étape de détection d'une particule du tritium comporte les sous-étapes suivantes :
- détermination si la somme des contributions de la première et la deuxième couche (232, 233) est supérieure au premier seuil de scintillation,
- comptage d'une particule α issue du radon 222 ou du thoron si la somme des contributions de la première et deuxième couche a été déterminée comme supérieure au premier seuil de scintillation,
- si la somme des contributions de la première et deuxième couche a été déterminée comme inférieure à un premier seuil de scintillation, détermination si la contribution de la première couche (232) est significative en vérifiant qu'elle est supérieure à un deuxième seuil de scintillation,
- comptage d'une particule β non issue du tritium ou d'un photon y, si la contribution de la première couche (232) a été identifiée comme étant significative,
- si la contribution de la première couche (232) a été identifiée comme étant non significative, détermination si la contribution de la deuxième couche (233) est significative en vérifiant qu'elle est supérieure à un troisième seuil de scintillation,
- comptage d'une particule β issue du tritium, si la contribution de la deuxième couche (233) a été identifiée comme étant significative.

6. Cellule de scintillation (20) pour la détection de rayonnements ionisants d'un fluide potentiellement radioactif, la cellule de scintillation (20) comprenant :
- au moins un premier guide d'onde (230) comprenant au moins une surface, la surface étant recouverte d'une première couche (232) d'un premier matériau de scintillation,
la cellule de scintillation (20) **étant caractérisée en ce qu**'elle comprend en outre une deuxième couche (233) d'un deuxième matériau de scintillation recouvrant la première couche (232), l'épaisseur de la deuxième couche (233) étant comprise entre 1 fois et 4 fois le parcours moyen d'une particule β du tritium dans le deuxième matériau de scintillation, le premier et le deuxième matériau de scintillation présentent au moins une caractéristique de scintillation différente l'une de l'autre de manière à permettre la distinction de leur contribution respective,
la deuxième couche étant destinée à être en contact avec le fluide.

7. Cellule de scintillation (20) selon la revendication 6 dans laquelle la caractéristique de scintillation différente entre le premier et le deuxième matériau de scintillation est une caractéristique temporelle de scintillation.

8. Cellule de scintillation (20) selon la revendication 7 dans laquelle la caractéristique temporelle de scintillation est choisie parmi la constante de temps de montée de la scintillation et la constante de temps de suppression de la scintillation et la somme des deux, le premier matériau de scintillation présentant une valeur de la caractéristique temporelle de scintillation supérieure à celle du deuxième matériau de scintillation.

9. Cellule de scintillation (20) selon la revendication 6, dans laquelle la caractéristique de scintillation différente entre le premier et le deuxième matériau de scintillation est la longueur d'onde de scintillation.

10. Cellule de scintillation (20) selon l'une quelconque des revendications 6 à 9, dans laquelle la cellule de détection comprend une enceinte (210) dans laquelle est destiné à être introduit le fluide potentiellement radioactif, et dans lequel le premier guide d'onde (230) est formé d'une plaque s'étendant le long d'un chemin d'écoulement du fluide dans l'enceinte (210).

11. Cellule de scintillation (20) selon la revendication 10 dans laquelle la surface du premier guide d'onde (20) est formée par une premier et une deuxième face de la plaque, chacune des première et deuxième face présentant la première et la deuxième couche (232, 233).

12. Cellule de scintillation (20) selon l'une quelconque des revendications 6 à 11, dans laquelle la cellule de scintillation (20) comporte en outre au moins un deuxième guide d'onde (230) comprenant au moins une surface, la surface comprenant une première et une deuxième couche (232, 233) sensiblement identiques à celles du premier guide d'onde (230), le premier et le deuxième guide d'onde (230) permettant de définir au moyen de leur surface respective un chemin d'écoulement du fluide.

13. Ensemble de détection (1) pour la détection de rayonnements ionisants d'un fluide potentiellement radioactif, comprenant une cellule de scintillation (20) et au moins un système de mesure optique pour enregistrer un signal de scintillation généré dans la cellule de scintillation (20), l'ensemble de détection (1) étant **caractérisé en ce que** la cellule de scintillation (20) est une cellule selon l'une quelconque des revendications 6 à 12 et **en ce que** le système de mesure optique permet de séparer les contributions respective de la première et la deuxième couche (232, 233) au signal de scintillation.

14. Ensemble de détection (1) selon la revendication 13, dans lequel le système de mesure optique (60) permet un enregistrement redondant du signal de scintillation.

15. Ensemble de détection (1) selon la revendication 13 ou 14, dans lequel la cellule de scintillation (20) est une cellule de scintillation selon la revendication 9 seule ou en combinaison avec l'une des revendications 10 à 12,
et dans lequel le système de mesure optique (30) comprend une première et une deuxième unité configurées pour enregistrer respectivement le signal de scintillation à la longueur d'onde correspondant au premier et au deuxième matériau.

## Patentansprüche

1. Verfahren zur Detektion von ionisierenden Strahlen eines potentiell radioaktiven Fluids mit Hilfe einer Szintillationszelle (20),
wobei die Szintillationszelle umfasst:
- wenigstens einen ersten Wellenleiter (230), der wenigstens eine Oberfläche umfasst, wobei die Oberfläche mit einer ersten Schicht (232) aus einem ersten Szintillationsmaterial bedeckt ist,
- eine zweite Schicht (233) aus einem zweiten Szintillationsmaterial, die die erste Schicht (232) bedeckt, wobei die Dicke der zweiten Schicht (233) zwischen 1 Mal und 4 Mal dem mittleren Weg eines β-Partikels von Tritium in dem zweiten Szintillationsmaterial enthalten ist, wobei das erste und das zweite Szintillationsmaterial wenigstens eine voneinander verschiedende Szintillationseigenschaft derart aufweisen, dass eine Unterscheidung ihres jeweiligen Beitrags ermöglicht wird, wobei die zweite Schicht (233) dazu ausgelegt ist, in Kontakt mit dem Fluid zu sein,
wobei das Detektionsverfahren die folgenden Schritte umfasst:
- Inkontaktbringen des Fluids mit wenigstens der zweiten Schicht (233),
- Detektion und Aufzeichnung des Szintillationssignals,
- Separierung des aufgezeichneten Szintillationssignals in einen ersten und einen zweiten Beitrag (C1, C2) von der ersten beziehungsweise von der zweiten Schicht (232, 233),
- Detektion eines β-Partikels, das von Tritium stammt, wenn der Beitrag der ersten Schicht (232) unterhalb einer Schwelle zur Detektion einer Strahlung ist, und wenn die Summe der Beiträge der ersten und der zweiten Schicht unterhalb einer ersten Szintillationsschwelle der Detektion eines α-Partikels ist, das von Radon 222 oder von Thoron stammt.

2. Detektionsverfahren nach Anspruch 1, bei dem die Szintillationseigenschaft, die zwischen dem ersten und dem zweiten Szintillationsmaterial verschieden ist, eine zeitliche Szintillationseigenschaft ist, wobei die zeitliche Szintillationseigenschaft ausgewählt ist aus der Anstiegszeitkonstanten der Szintillation und der Abbauzeitkonstanten der Szintillation und der Summe der beiden, wobei das erste Szintillationsmaterial einen Wert der zeitlichen Szintillationseigenschaft aufweist, der größer ist als jener des zweiten Szintillationsmaterials, und
bei dem der Schritt der Detektion und der Aufzeichnung des Szintillationssignals aus einem Schritt der Aufzeichnung der zeitlichen Variation des Szintillationssignals während einer gegebenen Zeit (t2) besteht,
und bei dem der Schritt der Separierung des aufgezeichneten Szintillationssignals aus einer Separierung der jeweiligen Beiträge der ersten und der zweiten Schicht ausgehend von einem ersten und einem zweiten zeitlichen Bereich ([0,t1], [t1, t2]) besteht, definiert ausgehend von der Szintillationseigenschaft, die zwischen dem ersten und dem zweiten Szintillationsmaterial verschieden ist.

3. Detektionsverfahren nach Anspruch 1, bei dem die Szintillationseigenschaft, die zwischen dem ersten und dem zweiten Szintillationsmaterial verschieden ist, die Szintillationswellenlänge ist, und
bei dem der Schritt der Detektion und der Aufzeichnung des Szintillationssignals aus einer Gewinnung des Szintillationssignals mit den jeweiligen Szintillationswellenlängen des ersten und des zweiten Szintillationsmaterials besteht,
bei dem der Schritt der Separierung des aufgezeichneten Szintillationssignals aus einer jeweiligen und separierten Gewinnung des Szintillationssignals mit dem Szintillationswellenlängen des ersten und des zweiten Szintillationsmaterials besteht.

4. Detektionsverfahren nach einem der Ansprüche 1 bis 3, bei dem während des Schritts der Detektion eines β-Partikels von Tritium die Art der dem detektierten Szintillationssignal zugrunde liegenden ionisierenden Strahlung identifiziert wird.

5. Detektionsverfahren nach Anspruch 4, bei dem der Schritt der Detektion eines Partikels von Tritium die folgenden Teilschritte umfasst:
- Bestimmen, ob die Summe der Beiträge der ersten und der zweiten Schicht (232, 233) oberhalb der ersten Szintillationsschwelle ist,
- Zählen eines α-Partikels, das von Radon 222 oder von Thoron stammt, wenn die Summe der Beiträge der ersten und der zweiten Schicht als oberhalb der ersten Szintillationsschwelle bestimmt worden ist,
- wenn die Summe der Beiträge der ersten und der zweiten Schicht als unterhalb einer ersten Szintillationsschwelle bestimmt worden ist, Bestimmen, ob der Beitrag der ersten Schicht (232) signifikant ist, indem überprüft wird, ob er oberhalb einer zweiten Szintillationsschwelle ist,
- Zählen eines β-Partikels, das nicht von Tritium stammt, oder eines γ-Photons, wenn der Beitrag der ersten Schicht (232) als signifikant identifiziert worden ist,
- wenn der Beitrag der ersten Schicht (232) als nicht signifikant identifiziert worden ist, Bestimmen, ob der Beitrag der zweiten Schicht (233) signifikant ist, indem überprüft wird, ob er oberhalb einer dritten Szintillationsschwelle ist,
- Zählen eines β-Partikels, das von Tritium stammt, wenn der Beitrag der zweiten Schicht (233) als signifikant identifiziert worden ist.

6. Szintillationszelle (20) für die Detektion von ionisierenden Strahlen eines potentiell radioaktiven Fluids, wobei die Szintillationszelle (20) Folgendes umfasst:
- wenigstens einen ersten Wellenleiter (230), der wenigstens eine Oberfläche umfasst, wobei die Oberfläche mit einer ersten Schicht (232) aus einem ersten Szintillationsmaterial bedeckt ist,
wobei die Szintillationszelle (20) **dadurch gekennzeichnet ist, dass** sie ferner eine zweite Schicht (233) aus einem zweiten Szintillationsmaterial umfasst, die die erste Schicht (232) bedeckt, wobei die Dicke der zweiten Schicht (233) zwischen 1 Mal und 4 Mal dem mittleren Weg eines β-Partikels von Tritium in dem zweiten Szintillationsmaterial enthalten ist, wobei das erste und das zweite Szintillationsmaterial wenigstens eine Szintillationseigenschaft aufweisen, die voneinander derart verschieden ist, dass die Unterscheidung ihres jeweiligen Beitrags ermöglicht wird,
wobei die zweite Schicht dazu ausgelegt ist, in Kontakt mit dem Fluid zu sein.

7. Szintillationszelle (20) nach Anspruch 6, bei der die Szintillationseigenschaft, die zwischen dem ersten und dem zweiten Szintillationsmaterial verschieden ist, eine zeitliche Szintillationseigenschaft ist.

8. Szintillationszelle (20) nach Anspruch 7, bei der die zeitliche Szintillationseigenschaft ausgewählt ist aus der Anstiegszeitkonstanten der Szintillation und der Abbauzeitkonstanten der Szintillation und der Summe der beiden, wobei das erste Szintillationsmaterial einen Wert der zeitlichen Szintillationseigenschaft aufweist, der größer als jener des zweiten Szintillationsmaterials ist.

9. Szintillationszelle (20) nach Anspruch 6, bei der die Szintillationseigenschaft, die zwischen dem ersten und dem zweiten Szintillationsmaterial verschieden ist, die Szintillationswellenlänge ist.

10. Szintillationszelle (20) nach einem der Ansprüche 6 bis 9, bei der die Detektionszelle ein Gehäuse (210) umfasst, in das das potentiell radioaktive Fluid eingeführt werden soll, und bei der der erste Wellenleiter (230) aus einer Platte gebildet ist, die sich entlang eines Strömungspfads des Fluids in dem Gehäuse (210) erstreckt.

11. Szintillationszelle (20) nach Anspruch 10, bei der Oberfläche des ersten Wellenleiters (20) durch eine erste und eine zweite Fläche der Platte gebildet ist, wobei jede von der ersten und zweiten Fläche die erste und die zweite Schicht (232, 233) aufweist.

12. Szintillationszelle (20) nach einem der Ansprüche 6 bis 11, bei der die Szintillationszelle (20) ferner wenigstens einen zweiten Wellenleiter (230) umfasst, der wenigstens eine Oberfläche umfasst, wobei die Oberfläche eine erste und eine zweite Schicht (232, 233) im Wesentlichen identisch zu jenen des ersten Wellenleiters (230) umfasst, wobei der erste und der zweite Wellenleiter (230) es ermöglichen, mit Hilfe ihrer jeweiligen Oberfläche einen Strömungspfad des Fluids zu definieren.

13. Detektionsanordnung (1) für die Detektion von ionisierenden Strahlen eines potentiell radioaktiven Fluids, umfassend eine Szintillationszelle (20) und wenigstens ein optisches Messsystem zum Aufzeichnen eines Szintillationssignals, das in der Szintillationszelle (20) generiert wird, wobei die Detektionsanordnung (1) **dadurch gekennzeichnet ist, dass** die Szintillationszelle (20) eine Zelle nach einem der Ansprüche 6 bis 12 ist, und dass das optische Messsystem eine Separierung der jeweiligen Beiträge der ersten und der zweiten Schicht (232, 233) zu dem Szintillationssignal ermöglicht.

14. Detektionsanordnung (1) nach Anspruch 13, bei dem das optische Messsystem (60) eine redundante Aufzeichnung des Szintilationssignals ermöglicht.

15. Detektionsanordnung (1) nach Anspruch 13 oder 14, bei dem die Szintillationszelle (20) eine Szintillationszelle nur nach Anspruch 9 oder in Kombination mit einem der Ansprüche 10 bis 12 ist,
und bei der das optische Messsystem (30) eine erste und eine zweite Einheit umfasst, die dazu konfiguriert sind, das Szintillationssignal mit der Wellenlänge aufzuzeichnen, die dem ersten beziehungsweise dem zweiten Material entspricht.

## Claims

1. Method for detecting ionising radiation from a potentially radioactive fluid by means of a scintillation cell (20),
said scintillation cell comprising:
- at least one first waveguide (230) comprising at least one surface, the surface being covered with a first layer (232) of a first scintillation material,
- a second layer (233) of a second scintillation material covering the first layer (232), the thickness of the second layer (233) being between 1 and 4 times the mean path of a tritium β particle in the second scintillation material, the first and the second scintillation material having at least one scintillation property that is different therebetween so as to allow their respective contributions to be distinguished, the second layer (233) being intended to be placed in contact with the fluid,
said method for detecting comprising the following steps:
- putting the fluid in contact with at least the second layer (233),
- detecting and recording the scintillation signal,
- separating the recorded scintillation signal into a respective first and a second contribution (C1, C2) of the first and of the second layer (232, 233),
- detecting a tritium β particle if the contribution of the first layer (232) is less than a radiation detection threshold and if the sum of the contributions of the first and of the second layer is less than a first scintillation threshold for detecting an α particle from radon 222 or from thoron.

2. Method for detecting according to claim 1, wherein the scintillation property that is different between the first and the second scintillation material is a temporal scintillation property, the temporal scintillation property being chosen from among the rising time constant of the scintillation and suppression time constant of the scintillation and the sum of the two, with the first scintillation material having a value of the temporal scintillation property that is greater than that of the second scintillation material, and
wherein step of detecting and of recording the scintillation signal consists in a step of recording the temporal variation of the scintillation signal during a given time (t2),
and wherein the step of separating the recorded scintillation signal consists in a separating of the respective contributions of the first and the second layer from a first and a second temporal range ([0,t1], [t1,t2]) defined using the scintillation property that is different between the first and the second scintillation material.

3. Method for detecting according to claim 1, wherein the scintillation property that is different between the first and the second scintillation material is the scintillation wavelength, and
wherein the step of detecting and of recording the scintillation signal consists in a recovering of the scintillation signal at the respective scintillation wavelengths of the first and of the second scintillation material,
wherein the step of separating the recorded scintillation signal consists in a respective and separate recovering of the scintillation signal at the scintillation wavelengths of the first and of the second scintillation material.

4. Method for detecting according to any of claims 1 to 3, wherein during the step of detecting a tritium β particle, the nature of the ionising radiation at the origin of the scintillation signal detected is identified.

5. Method for detecting according to claim 4, wherein the step of detecting a tritium particle comprises the following sub-steps:
- determining if the sum of the contributions of the first and the second layer (232, 233) is greater than the first scintillation threshold,
- counting an α particle from radon 222 or from thoron if the sum of the contributions of the first and second layer was determined as being greater than the first scintillation threshold,
- if the sum of the contributions of the first and second layer was determined as being less than a first scintillation threshold, determining if the contribution of the first layer (232) is significant by verifying that it is greater than a second scintillation threshold,
- counting a β particle that is not from tritium or of a photon y, if the contribution of the first layer (232) was identified as being significant,
- if the contribution of the first layer (232) was identified as being non-significant, determining if the contribution of the second layer (233) is significant by verifying that it is greater than a third scintillation threshold,
- counting a tritium β particle, if the contribution of the second layer (233) was identified as being significant.

6. Scintillation cell (20) for the detecting of ionising radiation from a potentially radioactive fluid, the scintillation cell (20) comprising:
- at least one first waveguide (230) comprising at least one surface, the surface being covered with a first layer (232) of a first scintillation material,
the scintillation cell (20) being **characterised in that** it further comprises a second layer (233) of a second scintillation material covering the first layer (232), the thickness of the second layer (233) being between 1 and 4 times the mean path of a tritium β particle in the second scintillation material, the first and the second scintillation material having at least one scintillation property that is different therebetween so as to allow their respective contributions to be distinguished,
the second layer being intended to be placed in contact with the fluid.

7. Scintillation cell (20) according to claim 6 wherein the scintillation property that is different between the first and the second scintillation material is a temporal scintillation property.

8. Scintillation cell (20) according to claim 7 wherein the temporal scintillation property is chosen from among the rising time constant of the scintillation and the suppression time constant of the scintillation and the sum of the two, the first scintillation material having a value of the temporal scintillation property that is higher than that of the second scintillation material.

9. Scintillation cell (20) according to claim 6, wherein the scintillation property that is different between the first and the second scintillation material is the scintillation wavelength.

10. Scintillation cell (20) according to any of claims 6 to 9, wherein the cell for detecting comprises an enclosure (210) wherein the potentially radioactive fluid is intended to be introduced, and wherein the first waveguide (230) is formed from a plate that extends along a flow path of the fluid in the enclosure (210).

11. Scintillation cell (20) according to claim 10 wherein the surface of the first waveguide (20) is formed by a first and a second face of the plate, with each one of the first and second faces having the first and the second layer (232, 233).

12. Scintillation cell (20) according to any of claims 6 to 11, wherein the scintillation cell (20) further comprises at least one second waveguide (230) comprising at least one surface, the surface comprising a first and a second layer (232, 233) that are substantially identical to those of the first waveguide (230), with the first and the second waveguide (230) making it possible to define by means of their respective surface a flow path of the fluid.

13. Assembly for detecting (1) for detecting ionising radiation from a potentially radioactive fluid, comprising a scintillation cell (20) and at least one optical measurement system for recording a scintillation signal generated in the scintillation cell (20), the assembly for detecting (1) being **characterised in that** the scintillation cell (20) is a cell according to any of claims 6 to 12 and **in that** the optical measurement system makes it possible to separate the respective contributions of the first and the second layer (232, 233) in the scintillation signal.

14. Assembly for detecting (1) according to claim 13, wherein the optical measurement system (60) allows for a redundant recording of the scintillation signal.

15. Assembly for detecting (1) according to claim 13 or 14, wherein the scintillation cell (20) is a scintillation cell according to claim 9 alone or in combination with one of claims 10 to 12,
and wherein the optical measurement system (30) comprises a first and a second unit configured to respectively record the scintillation signal at the wavelength that corresponds to the first and to the second material.
